# DEMANDE DE BREVET EUROPEEN

(11) **EP 1 134 199 A1**
(43) Date de publication de la demande: **19.09.2001**
(21) Numéro de dépôt: 01400568.0
(22) Date de dépôt: 05.03.2001
(51) Int. Cl.: C03B 37/012, C03B 37/027, G02B 6/16

(54) **Procédé de fabrication d'une fibre optique à dispersion chromatique variable et fibre obtenue par le procédé**

(30) Priorité: 16.03.2000 FR 0003372
(71) Demandeur: ALCATEL, 75008 Paris (FR)
(72) Inventeur: Rousseau, Jean-Claude, 78400 Chatou (FR); Chariot, Jean-François, 78160 Marly Le Roi (FR)
(74) Mandataire: Laroche, Danièle

(57) **Abrégé**

L'invention propose de fabriquer une fibre optique à dispersion chromatique variable par étirage d'une préforme présentant plusieurs couches, dont au moins l'une a une viscosité différente des autres couches à la température d'étirage. La tension d'étirage varie au cours de l'étirage, de sorte à obtenir une fibre présentant un diamètre constant et un profil variable. La dispersion chromatique de la fibre peut donc varier le long de la fibre.

L'invention s'applique à la fabrication de fibres à gestion de dispersion (DMF).

## Description

L'invention concerne les fibres optiques utilisées notamment pour les réseaux de télécommunications, et plus précisément la fabrication des fibres optiques.

Il est connu, pour la fabrication de fibres optiques, de fabriquer des préformes avec des dopages radiaux fonction du profil d'indice recherché dans la fibre, puis de procéder au fibrage ou à l'étirage de la préforme pour obtenir la fibre optique. Une telle préforme présente généralement un coeur dopé et une gaine de silice déposée autour du coeur. Dans ce contexte, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent. Les variations d'indice sont assurées par dopages, par exemple à l'aide de germanium ou de phosphore.

Dans certaines applications de transmission, il est souhaitable que les caractéristiques de propagation de la fibre optique - et notamment sa dispersion chromatique - varie le long de la fibre. C'est notamment le cas pour les transmissions en régime soliton. Il a été proposé d'utiliser des fibres présentant une dispersion chromatique décroissante avec la distance, ou encore des fibres avec une dispersion chromatique présentant alternativement des valeurs non-nulles et de signes opposés. Ces dernières fibres sont appelées fibres à gestion de dispersion chromatique (en anglais "dispersion managed fibers").

WO-A-97 30944 propose un procédé de fabrication de fibre optique dont les propriétés varient axialement. Ce document propose de faire avancer à des vitesses variables dans un four d'étirage un verre cylindrique formant le coeur de la fibre et un verre annulaire entourant le verre cylindrique et formant la gaine de la fibre. Les vitesses sont choisies de sorte à assurer que la fibre formée par étirage présente un diamètre constant, le diamètre du coeur variant le long de la fibre. Cette solution permet de produire des fibres dont la dispersion varie le long de la fibre et par exemple des fibres à dispersion décroissante ou des fibres à gestion de dispersion. L'inconvénient du procédé de ce document est sa complexité.

WO-A-98 25 861 décrit une autre solution pour la fabrication de fibres dont les caractéristiques de transmission varient le long de la fibre. Il est proposé dans un premier mode de réalisation de ce document de déposer pour former une préforme des couches dopées présentant une épaisseur croissante d'une extrémité de la préforme à l'autre. On entoure le coeur de préforme conique ainsi formé d'une gaine avant de procéder à l'étirage de la fibre. Dans un deuxième mode de réalisation de ce document, il est proposé de former une préforme en déposant des couches d'épaisseur constante, mais avec des proportions de dopant variables. Dans un cas comme dans l'autre, l'étirage de la préforme fournit une fibre dont les caractéristiques de propagation varient en fonction de la position le long de la fibre.

EP-A-0 737 873 propose divers modes de fabrication de fibres à gestion de dispersion chromatique. Dans un premier mode de réalisation, la fibre après étirage est soumise périodiquement à une irradiation aux ultraviolets, qui a pour effet d'augmenter localement l'indice des parties dopées. Dans un deuxième mode de réalisation, le coeur de préforme est usiné pour présenter des parties alternées de diamètre différent. La gaine déposée autour du coeur assure un diamètre constant de la préforme. Dans un troisième mode de réalisation, la préforme est chauffée localement et étirée, ce qui a pour effet d'en faire diminuer le diamètre dans la zone chauffée. Dans un quatrième mode de réalisation, la préforme est chauffée et comprimée longitudinalement. Dans un cinquième mode de réalisation, le coeur de préforme présente un diamètre constant, mais la gaine est usinée de sorte à présenter des sections alternées de diamètres distincts; la fibre est étirée à diamètre constant. Dans un sixième mode de réalisation, des manchons sont ajoutés autour de la préforme pour définir les zones de diamètre plus important. Dans un dernier mode de réalisation il est proposé de réaliser deux préformes de caractéristiques différentes, d'en découper des sections, et d'assembler alternativement des sections provenant des deux préformes dans un manchon.

K. Nakajima et autres, Design of dispersion managed fiber and its FWM suppression performance, OFC'99, ThG3 décrit une fibre à gestion de dispersion dont les différentes plages de dispersion sont obtenues en contrôlant le diamètre de la fibre, en changeant la vitesse d'étirage. La fibre présente des sections alternées de diamètre respectif 122 et 127 µm, avec une dispersion chromatique respective de ±1 ps/(nm.km). Cette solution n'est pas satisfaisante dans la pratique, les variations du diamètre de la fibre par rapport au diamètre standard de 125 µm posant des problèmes mécaniques, par exemple pour raccorder les fibres.

L'invention propose un procédé de fabrication d'une fibre à gestion de dispersion, qui permette une fabrication plus simple que les procédés de l'art antérieur.

L'invention concerne un procédé de fabrication d'une fibre optique par étirage d'une préforme présentant un coeur et un manchon, le coeur étant formé d'une pluralité de couches dont au moins une présente une viscosité différente des autres couches à la température d'étirage, le procédé comprenant au moins une variation de la tension d'étirage au cours de l'étirage.

Avantageusement, la dite couche est dopée par un dopant abaissant la viscosité. Ce dopant peut être choisi dans le groupe constitué de l'aluminium, du titane et du zirconium. Le dopant est par exemple en proportion de 500 ppm à 1% dans la dite couche.

Dans un mode de réalisation, la préforme présente un profil d'indice en trapèze avec au moins un anneau, ou un profil d'indice en trapèze.

Dans un mode de réalisation, l'étirage est un étirage à diamètre de fibre constant. La tension d'étirage varie avantageusement entre 40 et 150 g. Elle peut varier continûment ou discrètement au cours de l'étirage. Dans un mode de réalisation, la tension d'étirage varie pendant une durée correspondant à l'étirage d'une longueur de 1 km de fibre.

D'autres caractéristiques et avantages de l'invention apparaîtront à la lecture de la description qui suit de modes de réalisation de l'invention, donnés à titre d'exemple uniquement, et en référence aux dessins annexés qui montrent :
- figure 1 une représentation schématique du profil d'indice de consigne d'une préforme selon l'invention ;
- figures 2 à 4, des représentations schématiques du profil d'indice de consigne de fibre selon l'invention.

L'invention propose, pour faire varier la dispersion chromatique le long d'une fibre, de munir la préforme d'une couche présentant une viscosité différente des autres couches de la préforme. Lors du fibrage, des variations de la tension de fibrage ont alors pour effet de faire varier dans cette couche l'indice de réfraction, et donc la dispersion chromatique. L'invention simplifie la fabrication de la préforme, et n'implique pas comme proposé dans EP-A-0 737 873 d'usinage complexe de la préforme. Elle permet aussi d'obtenir une fibre de diamètre constant, et évite donc les problèmes mécaniques provoqués par les variations de diamètre. L'invention s'applique comme expliqué, pour faire varier la dispersion chromatique le long de la fibre; plus généralement, elle permet de faire varier au moins une caractéristique de propagation de la fibre.

Selon l'invention, la couche présentant une viscosité différente est la couche la plus extérieure du coeur de préforme. On peut ainsi faire apparaître au fibrage un anneau dans le profil d'indice.

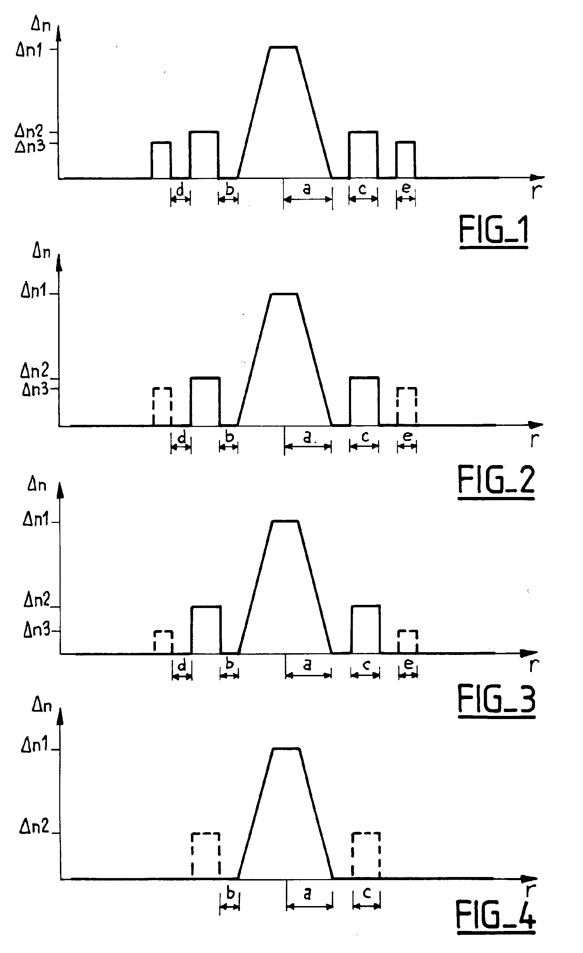

La figure 1 montre une représentation schématique du profil d'indice de consigne d'une préforme selon un premier mode de réalisation de l'invention; dans ce mode de réalisation, le profil d'indice est un profil d'indice du type en trapèze, avec deux anneaux. On trouve, en partant du centre de la préforme :
- une partie centrale avec un indice sensiblement constant supérieur ou égal à l'indice de la gaine;
- une partie entourant cette partie centrale, sur laquelle l'indice décroît sensiblement linéairement; cette partie et la partie centrale constituant un profil en trapèze;
- une partie annulaire d'indice égal à l'indice de la gaine;
- un premier anneau, d'indice sensiblement constant et supérieur à l'indice de la gaine ;
- une partie annulaire d'indice égal à l'indice de la gaine ;
- un deuxième anneau;
- la gaine.

Le profil d'indice est donc un profil d'indice en trapèze, avec deux anneaux. Selon l'invention, la viscosité d'au moins une couche de la préforme est modifiée, par rapport aux autres couches de la préforme. Dans l'exemple, la viscosité est modifiée dans la couche extérieure du coeur de préforme, qui forme un deuxième anneau ou un premier anneau. On peut à cet effet ajouter des dopants, et par exemple ajouter de l'aluminium, dans une proportion voisine de 5000 ppm, et plus précisément entre 500 ppm et 1%. L'ajout d'aluminium dans cette plage a pour effet de faire baisser la viscosité du verre au voisinage de la température d'étirage. D'autres dopants peuvent être utilisés dans le même but, et par exemple du titane ou du zirconium.

L'ajout d'aluminium à des proportions voisines de 10 ppm, ou plus généralement à des proportions inférieures à 200 ppm a pour effet de durcir la silice. On peut utiliser ces propriétés pour doper les autres couches de la préforme, et de la sorte augmenter la différence de viscosité entre les différentes couches de la préforme.

Les valeurs d'indices et de rayons dans le mode de réalisation de la figure 1 sont les suivantes. Les valeurs de rayons sont données en proportion du rayon a de la partie centrale en trapèze. Dans la préforme, le rayon a est typiquement de l'ordre de 2 mm.

Le rapport r entre les rayons des bases du trapèze - le rayon de la partie centrale et le rayon de la partie dans laquelle l'indice décroît sensiblement linéairement - est de 0,3. L'indice du trapèze présente avec l'indice de la gaine une différence △n1 de 10,2.10⁻³.

La gaine s'étendant entre le trapèze et le premier anneau présente une épaisseur b, qui vaut 0,6.a.

Le premier anneau présente une épaisseur c, qui vaut 0,8.a, et présente avec l'indice de la gaine une différence Δn2 de 3,35.10⁻³.

La gaine s'étendant entre le premier anneau et le deuxième anneau présente une épaisseur d, qui vaut 0,6.a. Son indice est égal à l'indice de la gaine.

Le deuxième anneau, selon l'invention, présente une viscosité différente des autres couches de la préforme; comme indiqué plus haut, cette variation de viscosité peut être obtenue par ajout d'aluminium, dans une proportion de 500 ppm à 1%, et de préférence en proportion voisine de 5000 ppm. L'épaisseur e du deuxième anneau dans la préforme est de 0,5.a. La différence d'indice An3 par rapport à l'indice de la gaine est nulle dans la préforme, et est nulle pour un étirage à tension faible. Elle est de 2,6.10⁻³ pour un étirage à forte tension, comme expliqué dans la suite.

Autour de ce deuxième anneau s'étend une gaine, par exemple jusqu'à un diamètre extérieur de 60 mm.

La préforme de la figure 1 peut être utilisée pour fabriquer la fibre de la figure 2, dans un appareillage de fibrage connu en soi. La couche formant le deuxième anneau présente une viscosité différente des autres couches de la préforme; de ce fait, contrairement à ce qui est le cas dans l'état de la technique, le profil de la fibre obtenue par étirage de la préforme n'est pas nécessairement directement homothétique du profil de la préforme : le profil de la fibre obtenue dépend de la tension d'étirage. Plus précisément, plus la tension d'étirage augmente, à diamètre de fibre constant, plus l'indice de la couche présentant une viscosité faible augmente; à l'inverse, lorsque la tension de fibrage diminue, l'indice de la couche présentant une viscosité faible augmente moins. De fait, la différence de viscosité se traduit au refroidissement par la présence de niveaux de contraintes de compression ou d'extension différents, et donc par des indices différents.

La tension à appliquer dépend de la différence de viscosité de la couche par rapport au reste de la préforme. Dans le cas d'un dopage de la couche à l'aluminium, dans les proportions données plus haut, la tension de fibrage peut avantageusement varier entre 40 et 150g. La différence d'indice entre la couche dopée et la gaine varie dans une plage de 1 à 3 .10⁻³. Plus généralement, pour la mise en oeuvre de l'invention, on peut modéliser la variation de l'indice en fonction de la tension par une fonction affine du type An = a.T + b, avec An la différence d'indice avec la gaine, T la tension de fibrage, a et b deux coefficients réels qui dépendent de la composition des différentes couches. Les coefficients peuvent être déterminés expérimentalement.

La figure 2 montre une représentation schématique du profil de consigne d'une fibre selon un premier mode de réalisation de l'invention. Dans ce mode de réalisation, la dispersion varie entre -1 et + 1 ps/(nm.km) grâce à une variation de la tension de fibrage entre des valeurs de tension de 40 g et 150 g. On a représenté en trait plein sur la figure le profil pour une tension de fibrage de 40 g (tension dite "faible") et en traits pointillés sur cette même figure le profil pour une tension de fibrage de 150 g (tension dite "forte"). La différence réside uniquement dans l'existence d'un deuxième anneau.

La fibre présente les caractéristiques suivantes. Pour une tension de fibrage faible, le profil est un profil en trapèze et anneau; avec le même type de notations que ci-dessus, on a
Rapport des bases du trapèze r' = 0,3
Rayon de coeur a' = 3,35 µm
Indice du trapèze △n1 = 10,2.10⁻³
Largeur de la gaine entre le trapèze et le premier anneau b' = 0,6.a'
Epaisseur du premier anneau c' = 0,8.a'
Indice du premier anneau △n2 de 3,35.10⁻³.

Pour une tension de fibrage forte, le profil est un profil en trapèze avec deux anneaux; les caractéristiques de la fibre sont les suivantes :
Rapport des bases du trapèze r' = 0,3
Rayon de coeur a' = 3,35 µm
Indice du trapèze Δn1 = 10,2.10⁻³
Largeur de la gaine entre le trapèze et le premier anneau b' = 0,6.a'
Epaisseur du premier anneau c' = 0,8.a'
Indice du premier anneau An2 de 3,35.10⁻³.
Largeur de la gaine entre le premier et le deuxième anneau d' = 0,5.a'
Epaisseur du deuxième anneau e' = 0,5.a'
Indice du deuxième anneau An3 de 2,6.10⁻³.

La tension de fibrage forte fait donc apparaître le deuxième anneau.

La tension de fibrage peut varier de façon continue ou de façon discrète. Dans un mode de réalisation préféré, la tension de fibrage est maintenue constante à la valeur faible pendant une durée correspondant à une longueur de fibre de 10 km, puis est commutée pour présenter la valeur forte pendant la même durée, et ainsi de suite. On obtient de la sorte une fibre à gestion de dispersion, avec des tronçons d'une longueur de 20 km. Le changement de profil entre deux tronçons s'effectue sur une distance inférieure à 2 km, et la dispersion est comprise entre -0,5 et +0,5 sur une distance de 1 km uniquement. Dans un tel cas, on peut dire que la tension d'étirage varie discrètement.

La figure 3 montre une représentation schématique du profil de consigne d'une fibre selon un deuxième mode de réalisation de l'invention. Dans ce mode de réalisation, la dispersion varie entre +2,2 et +0,8 ps/(nm.km) grâce à une variation de la tension de fibrage entre des valeurs de tension de 40 g et 150 g. Comme sur la figure 2, on a représenté en trait plein sur la figure le profil pour une tension de fibrage de 40 g (tension dite "faible") et en traits pointillés sur cette même figure le profil pour une tension de fibrage de 150 g (tension dite "forte"). La différence réside uniquement dans l'existence d'un deuxième anneau.

La fibre présente les caractéristiques suivantes. Pour une tension de fibrage faible, le profil est un profil en trapèze et anneau; avec les mêmes notations que ci-dessus, on a
Rapport des bases du trapèze r' = 0,3
Rayon de coeur a' = 3,35 µm
Indice du trapèze Δn1 = 9,9.10⁻³
Largeur de la gaine entre le trapèze et le premier anneau b' = 0,6.a'
Epaisseur du premier anneau c' = 0,8.α'
Indice du premier anneau Δn2 = 3,35.10⁻³.

Pour une tension de fibrage forte, le profil est un profil en trapèze avec deux anneaux; les caractéristiques de la fibre sont les suivantes :
Rapport des bases du trapèze r' = 0,3
Rayon de coeur α' = 3,35 µm
Indice du trapèze △n1 = 9,9.10⁻³
Largeur de la gaine entre le trapèze et le premier anneau b' = 0,6.a'
Epaisseur du premier anneau c' = 0,8.a'
Indice du premier anneau An2 de 3,35,10⁻³.
Largeur de la gaine entre le premier et le deuxième anneau d' = 0,5.a'
Epaisseur du deuxième anneau e' = 0,5.a'
Indice du deuxième anneau △n3 de 2,0.10⁻³.

La dispersion peut varier le long de la fibre comme dans le cas de la figure 2. On peut aussi de façon préférée faire varier la dispersion le long de la fibre continûment, c'est-à-dire en passant d'un profil à un autre sur des distances supérieures à 10 km, par exemple de l'ordre de 20 km. Dans ce cas, la dispersion reste toujours positive et décroît continûment. La fibre de la figure 3 peut être obtenue à l'aide d'une préforme similaire à celle de la figure 1, la valeur de l'indice △n1 du trapèze valant 9,9.10⁻³.

La figure 4 montre une représentation schématique du profil de consigne d'une fibre selon un troisième mode de réalisation de l'invention. Dans ce mode de réalisation, la dispersion varie entre +3,2 et +1,2 ps/(nm.km) grâce à une variation de la tension de fibrage entre des valeurs de tension de 40 g et 150 g. Comme sur les figures 2 et 3, on a représenté en trait plein sur la figure le profil pour une tension de fibrage de 40 g (tension dite "faible") et en traits pointillés sur cette même figure le profil pour une tension de fibrage de 150 g (tension dite "forte"). La différence réside uniquement dans l'existence d'un anneau.

La fibre présente les caractéristiques suivantes. Pour une tension de fibrage faible, le profil est un profil en trapèze, sans anneau; avec les mêmes notations que ci-dessus, on a
Rapport des bases du trapèze r' = 0,3
Rayon de coeur a' = 3,23 µm
Indice du trapèze △n1 = 10,1.10⁻³

Pour une tension de fibrage forte, le profil est un profil en trapèze avec un anneau; les caractéristiques de la fibre sont les suivantes :
Rapport des bases du trapèze r' = 0,3
Rayon de coeur a' = 3,23 µm
Indice du trapèze △n1 = 10,1.10⁻³
Largeur de la gaine entre le trapèze et l'anneau b' = 0,5.a'
Epaisseur de l'anneau c' = 0,9.a'
Indice de l'anneau An2 de 2,9.10⁻³.

La dispersion peut varier le long de la fibre comme dans le cas des figures 2 et 3, et de préférence varie continûment. La fibre de la figure 4 peut être obtenue à l'aide d'une préforme avec un profil d'indice en trapèze et anneau, la couche correspondant à l'anneau présentant une viscosité différente des autres couches de la préforme. La variation d'indice, et la variation correspondante de dispersion peut s'effectuer comme à la figure 2 sur une longueur choisie.

Dans les exemples, on a considéré le cas de fibres à gestion de dispersion, avec des dispersions présentant des valeurs constantes alternées. L'invention permet aussi de fabriquer des fibres dont la dispersion varie continûment, en faisant varier continûment la tension de fibrage au cours du fibrage.

Bien entendu, la présente invention n'est pas limitée aux exemples et modes de réalisation décrits et représentés, mais elle est susceptible de nombreuses variantes accessibles à l'homme de l'art. Dans les exemples proposés plus haut, on a fait varier l'indice de réfraction grâce à un anneau, c'est-à-dire grâce à une variation de viscosité dans les couches dopées les plus extérieures de la préforme. On pourrait aussi faire varier la viscosité dans d'autres parties de la préforme. Dans les exemples, on a aussi considéré une fibre à profil en trapèze, avec un ou deux anneaux. L'invention s'applique aussi à d'autres types de profil, et par exemple à des profils en piédestal et anneau, ou encore à des profils en rectangle avec anneau. La gaine entre le trapèze et l'anneau, ou entre le trapèze et les anneaux, peut présenter un indice différent de l'indice de la gaine, et notamment un indice inférieur à l'indice de la gaine.

## Revendications

1. Un procédé de fabrication d'une fibre optique à dispersion chromatique variable par étirage d'une préforme présentant un coeur et un manchon, le coeur étant formé d'une pluralité de couches dont au moins une présente une viscosité différente des autres couches à la température d'étirage, le procédé comprenant au moins une variation de la tension d'étirage au cours de l'étirage.

2. Le procédé de la revendication 1, **caractérisé en ce que** l'étirage est un étirage à diamètre de fibre constant.

3. Le procédé de l'une des revendications 1 et 2, **caractérisé en ce que** la tension d'étirage varie entre 40 et 150 g.

4. Le procédé de l'une des revendications 1 à 3, **caractérisé en ce que** la tension d'étirage varie continûment.

5. Le procédé de l'une des revendications 1 à 3, **caractérisé en ce que** la tension d'étirage varie discrètement.

6. Le procédé de la revendication 5, **caractérisé en ce que** la tension d'étirage varie pendant une durée correspondant à l'étirage d'une longueur de 1 km de fibre.

7. Le procédé de l'une des revendications 1 à 6, **caractérisé en ce que** la dite couche présentant une viscosité différente est dopée par un dopant abaissant la viscosité.

8. Le procédé de la revendication 7, **caractérisé en ce que** le dopant est choisi dans le groupe constitué de l'aluminium, du titane et du zirconium.

9. Le procédé de l'une des revendications 7 et 8, **caractérisé en ce que** le dopant est en proportion de 500 ppm à 1% dans la dite couche.

10. Le procédé de l'une des revendications précédentes, **caractérisé en ce que** la dite préforme présente un profil d'indice en trapèze, ou en trapèze avec au moins un anneau.

11. Fibre optique à dispersion chromatique variable obtenue par le procédé selon l'une des revendications précédentes.
